# EUROPEAN PATENT APPLICATION

(11) **EP 4 092 062 A1**
(43) Date of publication of application: **23.11.2022**
(21) Application number: 21175303.3
(22) Date of filing: 21.05.2021
(51) Int. Cl.: C08G 18/00, C08G 18/08, C08G 18/28, C08G 18/38, C08G 18/58, C08G 18/67, C08G 18/68, C08G 18/76, C08G 18/80, C08L 75/04, C09D 175/04, C09J 175/04, C08K 3/013, C08K 3/36, C08G 18/10, C09D 133/08, C09J 133/08

(54) **WATER-BASED PROTECTIVE COATINGS HAVING IMPROVED ADHESION TO LACQUERED METAL SUBSTRATES**

(71) Applicant: Sika Technology AG, 6340 Baar (CH)
(72) Inventor: Brüggemann, Simon, 20251 Hamburg (DE); Hanhörster, Thomas, 25421 Pinneberg (DE); Janke, Doreen, 25486 Alveslohe (DE)
(74) Representative: Sika Patent Attorneys

(57) **Abstract**

The invention relates to a composition containing an aqueous polymer dispersion of at least one polymer, at least one inorganic filler, and at least one reaction product of a polyisocyanate and a silane having only one isocyanate reactive group. The invention also relates to a method for protecting a substrate against stone-chipping and/or corrosion and to use of the composition for providing protective coatings.

## Description

### Technical field

The invention relates to water-based protective coatings having improved adhesion to lacquered metal substrates. Such compositions are particularly suitable for use in protecting metal parts of vehicles, such as busses, trucks, and railway coaches, against stone-chipping, corrosion, and other ambient impacts.

### Background of the invention

Sealants, coatings and adhesives based on solvent- or water-based polymer dispersions are commonly used in the field of construction for sealing joints, for protecting surfaces against water penetration, mechanical impacts and other ambient influences and for elastic bonding of substrates. These products harden by drying, which results in increased physical interaction between the polymers contained in the dispersion. Compared to solvent-based formulations, the water-based compositions have the inherent advantage of low emission of volatile organic solvents, which are known to be hazardous to environment and health of workers. Furthermore, the water-based sealants, coatings and adhesives are generally of low odor and more suitable for indoor applications.

Automotive vehicles such as cars, busses, trucks and railway coaches and especially the underbody components of such vehicles are often exposed to extreme environments in terms of weather exposure, salt water exposure, fresh water exposure, heat from the sun, and the like during their service lives. Abrasion resistant coatings are frequently used for protecting the metal parts of vehicles against stone-chipping, corrosion, and other ambient impacts. These protective coatings find their use mainly in the underbody regions of a vehicle and in wheel arches and in so called skills. They are also used to seal off spot-welded or otherwise mechanically fastened seams against penetration of dust and water.

State-of-the-art underbody protective coatings include plastisols, which are dispersions of organic polymers in plasticizers. These undergo a curing reaction when heated to relatively high temperatures of 130-160 °C and harden on cooling. Typical organic polymers used in plastisols include (meth)acrylate homopolymers and copolymers, styrene copolymers and in particular, PVC homopolymers and/or copolymers. In addition to the organic polymers, plastisols typically contain high-boiling hydrocarbons as extenders. Although the plasticizers and extenders have a relatively low vapor pressure, a small part of these components is evaporated when the applied composition is heated to the required curing temperature. This leads to emission and condensation problems in the coating ovens of the automotive industry. Due to the high curing temperature the plastisols are less suitable for use for coating of underbodies, particularly those of large vehicles.

Underbody protective coatings in form of polymer dispersions are also known and water-based systems are nowadays predominantly used due to the lower environmental impact. The coating compositions also contain low cost filler materials, which are used as reinforcing additives to improve the impact strength of the protective coating and furthermore to decrease the production costs. Underbody protective coatings based on aqueous polymer dispersions typically have a solids content of 65-75 % and densities of up to 1.5 g/cm³. Commonly used coatings must be applied with a thickness of up to 3 mm to ensure sufficient protection effect. However, due to the relatively high density of the coatings, the thickness of the applied coating may be limited by the maximum allowable axle weight of the vehicle.

Protective coatings based on aqueous polymer dispersions are subjected to certain requirements, which are related to their drying behavior and to the mechanical stability of the coatings at lower temperatures. The drying process should occur without unwanted blistering and formation of larger or smaller pores or unwanted expansion. The dried coating should not become brittle at temperatures below 0 °C and it should absorb only minor amounts of water when exposed to atmospheric moisture. The latter requirement is particularly challenging for water-based coating systems comprising polymers having at least partially water-soluble monomers. Furthermore, commonly used protective coatings are known to exhibit good bonding to metal surfaces, such as to aluminum, steel, and galvanized steel. However, the coatings compositions typically have significantly inferior bonding to lacquered metal surfaces, such as electrophoretically coated metal sheets.

Vehicle bodies are typically subjected to an electrophoretic coating process, such as cathodic dip coating/lacquering (CDC), during the assembly process to improve the corrosion resistance of the bodies. In a CDC process, the substrate to be coated is immersed in a bath of aqueous, electrically conductive dipping lacquer and used as a cathode. The substrate attracts the charged lacquer-particles and those adhere as an even layer on the surfaces of the substrate. Metal surfaces that have been treated in a CDC process with a corrosion protection liquid have been found out to exhibit particularly low bonding with protective coatings based on aqueous polymer dispersions.

There is thus a need for novel composition, which can be used for providing a protective coating for vehicle body structures, which have been treated in a CDC process to improve corrosion resistance.

### Summary of the invention

It is an objective of the present invention to provide a composition for use as protective coating for metal structures, which composition has good bonding to metal surfaces, which have been treated in a CDC process to improve corrosion resistance. The protective coating composition should also exhibit good stone impact and corrosion resistance even when applied in a relatively low coating weight.

Another objective of the present invention is to provide a method for protecting metal parts, in particular underbody parts of automotive vehicles against stone-chipping and corrosion.

It was surprisingly found out that the objectives can be achieved with a composition comprising an aqueous dispersion of at least one polymer, at least one inorganic filler, and at least one reaction product of a polyisocyanate and a silane having only one isocyanate reactive group.

The subject of the present invention is a composition as defined in claim 1.

One of the advantages of the composition of the present invention is that it provides good bonding to lacquered metal surfaces, which enables use of the composition for providing protective coatings for vehicle body structures, which have been treated in a CDC process to improve corrosion resistance.

Another advantage of the composition of the present invention is that is enables providing underbody protective coatings, which are substantially free of plasticizers and volatile organic solvents.

Other subjects of the present invention are presented in other independent claims. Preferred aspects of the invention are presented in the dependent claims.

### Detailed description of the invention

The subject of the present invention is a composition comprising:
a) An aqueous dispersion of at least one polymer **P**,
b) At least one inorganic filler **F**,
c) At least one reaction product **RP** of a polyisocyanate **PI** with a silane **SI** having only one isocyanate reactive group, wherein the at least one reaction product **RP** has a weight average molecular weight (M_{w}) of not more than 1500 g/mol, preferably not more than 1000 g/mol.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "copolymer" refers to a polymer derived from more than one species of monomer ("structural unit"). The polymerization of monomers into copolymers is called copolymerization. Copolymers obtained by copolymerization of two monomer species are known as bipolymers and those obtained from three and four monomers species are called terpolymers and quaterpolymers, respectively.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The terms "silane" and "organosilane" respectively identify compounds which in the first instance have at least one, customarily two or three, hydrolyzable groups bonded directly to the silicon atom via Si-O- bonds, more particularly alkoxy groups or acyloxy groups, and in the second instance have at least one organic radical bonded directly to the silicon atom via an Si-C bond. Silanes with alkoxy or acyloxy groups are also known to the person skilled in the art as organoalkoxysilanes and organoacyloxysilanes, respectively. "Tetraalkoxysilanes", consequently, are not organosilanes under this definition.

Correspondingly, the term "silane group" refers to the silicon-containing group bonded to the organic carbon radical via the Si-C bond. The silanes, and their silane groups, have the property of undergoing hydrolysis on contact with moisture. In so doing, they form organosilanols, these being organosilicon compounds containing one or more silanol groups (Si-OH groups) and, by subsequent condensation reactions, organosiloxanes, these being organosilicon compounds containing one or more siloxane groups (Si-O-Si groups).

Silane designations with functional groups as prefixes such as "aminosilanes" or "mercaptosilanes", for example, identify silanes which carry the stated functional group on the organic radical as a substituent.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160 °C.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1%.

In this document, an amine or an isocyanate is called "aliphatic" when its amine group or its isocyanate group, respectively, is directly bound to an aliphatic, cycloaliphatic or arylaliphatic moiety. The corresponding functional group is therefore called an aliphatic amine or an aliphatic isocyanate group, respectively.

A dashed line in the chemical formulas of this document represents the bonding between a moiety and the corresponding rest of the molecule.

The "amount or content of at least one component X" in a composition, for example "the amount of the at least one polymer P" refers to the sum of the individual amounts of all polymers P contained in the composition. For example, in case the composition comprises 20 wt.-% of at least one polymer P, the sum of the amounts of all polymers P contained in the composition equals 20 wt.-%.

In this document, the term "room temperature" refers to a temperature of ca. 23°C.

Preferably, the composition of the present invention is a one-component composition. The term "one-component composition" or "one-part composition" refers in the present document to a composition, which is contained in a single container, preferably a moisture-tight container, and which composition has a certain storage stability. The term "storage stability" refers to the ability of a composition to be stored at room temperature in a suitable container under exclusion of moisture for a certain time interval, in particular several months, without undergoing significant changes in application or end-use properties.

The composition of the present invention comprises as the first compulsory constituent an aqueous polymer dispersion of at least one polymer **P**.

The term "dispersion" refers in the present document to a physical state of matter that includes at least two distinct phases, wherein a first phase is distributed in a second phase, with the second phase being a continuous medium. Preferably, the dispersion comprises a solid phase which is dispersed as solid particles in a continuous liquid phase. Consequently, the term "polymer dispersion" refers to a composition comprising a continuous liquid phase and solid particles of one or more polymers dispersed in the liquid phase. The term "aqueous polymer dispersion" refers to a polymer dispersion having water as the main carrier. Preferably, the term "aqueous" refers to a 100 % water carrier.

The aqueous polymer dispersion of at least one polymer **P** can be prepared by polymerization, such as free-radical polymerization, using substance, solution, suspension, or emulsion polymerization techniques, which are all known to the person skilled in the art. For example, the aqueous dispersions can be prepared by providing the at least one polymer **P** using solution polymerization with subsequent dispersion in water or by using emulsion polymerization to directly obtain the aqueous polymer dispersions.

Alternatively, the aqueous polymer dispersion of at least one polymer **P** can be prepared by using commercially available aqueous polymer dispersions and/or re-dispersible polymer powders, which can be mixed with water and/or with aqueous polymer dispersions to obtain the aqueous polymer dispersion of at least one polymer **P**. Furthermore, aqueous polymer dispersions can be diluted with additional water to adjust the solids content of the dispersion.

The term "re-dispersible polymer powder" refers to a dried residue of an aqueous polymer dispersion, said dispersion being a mixture of at least one water-insoluble film-forming polymer. Re-dispersible polymer powders are generally produced by spray-drying techniques of water-based dispersions containing, for example, polymers based on vinyl esters, such as vinyl acetate, vinyl chloride, (meth)acrylate monomers, styrene, butadiene, and ethylene. Re-dispersible polymer powders may further comprise one or more compounds selected from colloidal stabilizers and antiblocking agents. Examples of re-dispersible polymer powders and methods for producing thereof are disclosed, for example, in patent application US 2005/0014881 A1.

The amount of the at least one polymer **P** in the composition is not particularly restricted. It is however preferred that the at least one polymer **P** comprises not more than 75 wt.-%, more preferably not more than 65 wt.-%, of the total weight of the composition. According to one or more embodiments, the at least one polymer **P** comprises 1 - 50 wt.-%, preferably 5 - 45wt.-%, more preferably 10 - 35wt.-%, even more preferably 10 - 30 wt.-%, of the total weight of the composition.

The amount of the water in the composition is typically adjusted to ensure the storage stability of the composition. On the other hand, the amount of water is preferably minimized to reduce the drying time of the composition. It may be preferred that the composition comprises not more than 55 wt.-%, more preferably not more than 45 wt.-%, based on the total weight of the composition, of water. According to one or more embodiments, the composition of the invention comprises 1 - 35 wt.-%, preferably 2.5 - 30 wt.-%, more preferably 5 - 30 wt.-%, even more preferably 7.5 - 25 wt.-%, based on the total weight of the composition, of water.

Suitable polymers **P** for use in the composition include, for example, copolymers obtained from free radical polymerization of monomers selected from the group consisting of ethylene, propylene, butylene, isoprene, butadiene, styrene, acrylonitrile, (meth)acrylic acid, (meth)acrylate, vinyl ester, and vinyl chloride. The term "(meth)acrylic" refers to methacrylic or acrylic. Accordingly, the term "(meth)acrylate" refers to methacrylate or acrylate.

Further suitable polymers **P** include polyvinyl acetate, polyvinyl alcohol, poly(meth)acrylates, random and block copolymers of olefinic monomers, polyurethane polymers, silicones, and rubbers, such as styrene butadiene rubber, natural rubber, styrene isoprene rubber, polyisoprene, polybutadiene, polychloroprene, butyl rubber, halogenated butyl rubber, chlorinated polyethylene, chlorosulfonated polyethylene, ethylene propylene rubber, and butadiene acrylonitrile copolymers. The term "polyurethane polymer" refers in the present disclosure to polymers prepared by so called diisocyanate polyaddition process, including those polymers which are almost or completely free of urethane groups. Examples of polyurethane polymers are polyether polyurethanes, polyester polyurethanes, polyether polyureas, polyureas, polyester polyureas, polyisocyanurates, and polycarbodiimides.

According to one or more embodiments, the at least one polymer **P** has
- a glass transition temperature (T_{g}) measured by dynamical mechanical analysis (DMA) as the peak of the measured loss modulus (G") curve using an applied frequency of 1 Hz and a strain level of 0.1 % of 5 - 100 °C, preferably 5 - 75 °C, more preferably 10 - 50 °C, even more preferably 15 - 45 °C and/or
- a number average molecular weight (Mₙ) in the range of 5000 - 250000 g/mol, preferably 25000 - 200000 g/mol, even more preferably 50000 - 200000 g/mol.

Polymers having a glass transition temperature (T_{g}) in the above cited ranges have been found out to be suitable for forming films having high strength and wear resistance, which is essential in protective coating applications.

According to one or more embodiments, the at least one polymer **P** is selected from the group consisting of ethylene/vinyl acetate copolymers, ethylene/alkyl acrylate copolymers, ethylene/(meth)acrylic acid copolymers, ethylene/(meth)acrylate copolymers, vinyl chloride/ethylene/vinyl laureate copolymers, vinyl chloride/ethylene/vinyl ester/(meth)acrylate copolymers, vinyl acetate/(met)acrylate copolymers, vinyl acetate/vinyl versatate copolymers, vinyl acetate/ethylene/(meth)acrylate copolymers, (meth)acrylate/vinyl esters of tertiary carboxylic acids copolymers, (meth)acrylate/vinyl esters of tertiary carboxylic acids/vinyl acetate copolymers, (meth)acrylate/styrene copolymers, (meth)acrylate/styrene/butadiene copolymers, (meth)acrylate/acrylonitrile copolymers, (meth)acrylic acid/styrene copolymers, styrene/butadiene copolymers and carboxylated copolymers, styrene/isoprene copolymers, poly(meth)acrylates, and polyurethanes.

Suitable aqueous polymer dispersions of at least one polymer **P** are commercially available, for example
from Synthomer (UK) limited under the trade name of Lipaton^{®}, such as Lipaton^{®} SB 2540, Lipaton^{®} SB 3040, and Lipaton^{®} SB 2740 (styrene butadiene copolymers) and under the trade name of Plextol^{®}, such as Plextol E 303 and Plextol X 4002 (pure acrylics);
from Celanese under the trade name of Mowilith^{®}, such as Mowilith^{®} LDM 7978 (acrylic) and Mowilith^{®} LDM 7651 (styrene acrylic);
from BASF under the trade name of Acronal^{®}, such as Acronal^{®} V 278 (acrylate), Acronal^{®} V 212 (acrylate), Acronal^{®} 81 D (acrylate), Acronal^{®} 4 F (acrylate),
Acronal^{®} DS 5017 (pure acrylate), and Acronal^{®} A 107 (pure acrylate);
from Airproducts under the trade name of Airflex^{®}, such as Airflex^{®} EF811 (vinyl acrylic copolymer);
from Arkema under the trade name of Encor^{®}, such as Encor^{®} flex 187 (acrylic), Encor^{®} 123 (styrene acrylic), Encor^{®} flex 192 (styrene acrylic), and Encor^{®} 9176 (styrene acrylic);
from Wacker Chemie under the trade name of Vinnapas^{®}, such as Vinnapas^{®} EAF 60 and Vinnapas^{®} EAF 67 (vinyl acetate/ethylene/acrylate copolymer), Vinnapas^{®} CEF 52 (vinyl chloride/ethylene/vinyl ester/acrylate copolymer); and from Dow Chemicals under the trade name of Primal^{®}, such as Primal^{®} CA-162 and Primal^{®} CA-172 (acrylic).

Suitable water re-dispersible polymer powders for preparing the aqueous dispersion of at least one polymer **P** are commercially available, for example from

Wacker Chemie under the trade name of Vinnapas^{®}, such as Vinnapas^{®} 2000 series, Vinnapas^{®} 3000 series, Vinnapas^{®} 4000 series, Vinnapas^{®} 5000 series, Vinnapas^{®} 7000 series, and Vinnapas^{®} 8000 series; and from Synthomer under the trade name of Axilat^{®}, such as Axilat^{®} HP 8000 series, Axilat^{®} UP series, Axilat^{®} PSB 150 (styrene butadiene copolymer), and Axilat^{®} PAV series (vinyl acetate vinyl versatate copolymer).

According to one or more embodiments, the at least one polymer **P** is selected from the group consisting of ethylene/vinyl acetate copolymers, (meth)acrylate/vinyl acetate copolymers, (meth)acrylate/ styrene copolymers, styrene/butadiene copolymers, (meth)acrylate/styrene/butadiene copolymers, and vinyl chloride/ethylene/vinyl ester/acrylate copolymers.

Aqueous polymer dispersions comprising one or more of the listed polymers have been found out to be particularly suitable for use in protective coatings.

According to one or more embodiments, the at least one polymer **P** comprises at least one acrylic polymer **P1**.

Generally, the expression "the at least one component X comprises at least one component XN", such as "the at least one polymer **P** comprises at least one acrylic polymer **P1**" is understood to mean in the context of the present disclosure that a composition that comprises one or more acrylic polymers **P1** as representatives of the at least one polymer **P**.

The term "acrylic polymer" refers in the present document to homopolymers, copolymers and higher inter-polymers of an acrylic monomer with one or more further acrylic monomers and/or with one or more other ethylenically unsaturated monomers. The term "acrylic monomer" refers in the present document to esters of (meth)acrylic acid, (meth)acrylic acid or derivatives thereof, for example, amides of (meth)acrylic acid or nitriles of (meth)acrylic acid. Preferably, the acrylic polymer contains at least 25 wt.-%, more preferably at least 35 wt.-%, based on the weight of the polymer, of acrylic monomers.

Particularly suitable acrylic polymers consist for the most part of (meth)acrylates of alcohols containing from 1 to 24 carbon atoms ((meth)acrylic acid ester monomers). There are preferably more than 25 wt.-% of these basic monomer building blocks in the acrylic polymer. Further monomer building blocks include, for example, vinyl esters and allyl esters of carboxylic acids containing from 1 to 20 carbon atoms, vinyl ethers of alcohols containing from 1 to 8 carbon atoms, vinyl aromatic compounds, particularly styrene, vinyl halides, non-aromatic hydrocarbons containing from 2 to 8 carbon atoms and at least one olefinic double bond, α and β-unsaturated mono- or di-carboxylic acids containing from 3 to 6 carbon atoms, and derivatives thereof (especially amides, esters and salts). Monomers containing silane-groups can also be present in the acrylic polymers.

Preferably, the at least one acrylic polymer **P1** has
- a number average molecular weight (Mₙ) in the range of 5000 - 200000 g/mol, more preferably 25000 - 200000 g/mol, even more preferably 50000 - 200000 g/mol and/or
- a weight average molecular weight (M_{w}) in the range of 50000 - 800000 g/mol, more preferably 100000 - 800000 g/mol, even more preferably 150000 - 800000 g/mol.

Suitable aqueous dispersions of acrylic polymers and preparation method thereof are described, for example in EP 0490191 A2, DE 19801892 A1, and in EP 0620243.

Suitable commercially available aqueous dispersions of acrylic polymers include Acronal^{®} A200, Acronal^{®} A323, Acronal^{®} A378, Acronal^{®} 380, Acronal^{®} 5036, Acronal^{®} 5041, Acronal^{®} 6767, Acronal^{®} S 410, Acronal^{®} S 559, Acronal^{®} 5047, Acronal^{®} V275, Acronal^{®} V278 (all from BASF); Airflex^{®} EAF 60, and Airflex^{®} EAF 67 (all from APP); Mowilith^{®} DM 1340 (from Clariant); and Primal^{®} CA 162 and Primal^{®} CA 172 (from Rohm and Haas).

The at least one acrylic polymer **P1** can comprise two or more different acrylic polymers having different glass transition temperatures and different monomer compositions. Aqueous polymer dispersions comprising two or more different acrylic polymers can be prepared by mixing commercially available acrylic polymer dispersions, such as those described above.

According to one or more embodiments, the at least one polymer **P** comprises the at least one acrylic polymer **P1** and further at least one polymer **P2** selected from the group consisting of styrene/butadiene copolymers, ethylene/vinyl acetate copolymers, and polyurethanes.

The composition of the present invention further comprises at least one inorganic filler **F**. The at least one filler **F** may be selected to improve the stone-chipping and corrosion resistance of the protective coating as well as to adjust the rheological properties of the composition

Suitable fillers include inorganic and synthetic organic fillers, examples being natural, ground or precipitated calcium carbonates, optionally with a coating of fatty acids, more particularly steric acid or siloxanes, barium sulfate (BaSO₄, also called barytes or heavy spar), kaolins, aluminum oxides, silicas, particularly finely divided silicas from pyrolysis operations.

According to one or more embodiments, the at least one inorganic filler **F** comprises 5 - 65 wt.-%, preferably 10 - 60 wt.-%, more preferably 20 - 55 wt.-%, even more preferably 30 - 55 wt.-%, of the total weight of the composition.

Suitable inorganic fillers **F** include, for example, calcium carbonate, magnesium carbonate, talc, clay, expanded clay, diatomaceous earth, pumice, muscovite (mica), kaolin, dolomite, xonotlite, perlite, vermiculite, Wollastonite, barium sulphate, cristobalite, silica, fumed silica, fused silica, glass beads, hollow glass spheres, ceramic spheres, bauxite, comminuted (recycled concrete), and zeolites.

Preferably, the at least one inorganic filler **F** has a median particle size dso or not more than 250 µm, more preferably not more than 150 µm, more preferably not more than 100 µm, even more preferably not more than 50 µm. The term "particle size" refers in the present disclosure to the area-equivalent spherical diameter of a particle (Xₐᵣₑₐ). The term "median particle size d₅₀" refers to a particle size below which 50 % of all particles by volume are smaller than the dso value. A particle size distribution can be measured by laser diffraction according to the method as described in standard ISO 13320:2009 using a wet or dry dispersion method and for example, a Mastersizer 2000 device (trademark of Malvern Instruments Ltd, GB).

According to one or more embodiments, the at least one inorganic filler **F** has a median particle size dso of 0.1 - 100 µm, preferably 1 - 50 µm, more preferably 2 - 25 µm, even more preferably 5 - 15 µm.

According to one or more embodiments, the at least one inorganic filler **F** is selected from the group consisting of calcium carbonate, magnesium carbonate, talc, clay, expanded clay, diatomaceous earth, pumice, muscovite (mica), kaolin, dolomite, xonotlite, perlite, vermiculite, Wollastonite, barium sulphate, cristobalite, silica, fumed silica, fused silica, and bauxite.

According to one or more embodiments, the at least one inorganic filler **F** comprises at least one first filler **F1** and at least one second filler **F2** that is different from the at least one first filler **F1**, wherein the at least one first filler **F1** is preferably selected from the group consisting of calcium carbonate, magnesium carbonate, and talc and wherein the at least one second filler **F2** is preferably selected from the group consisting of muscovite (mica), xonotlite, perlite, Wollastonite, barium sulphate, and cristobalite.

The composition of the present invention further comprises at least one reaction product **RP** of a polyisocyanate **PI** with a silane **SI** having only one isocyanate-reactive group.

According to one or more embodiments, the at least one reaction product **RP** comprises 0.1 - 2.5 wt.-%, preferably 0.1 - 1.5 wt.-%, more preferably 0.15 - 1.25 wt.-%, even more preferably 0.25 - 1.0 wt.-%, still more preferably 0.35 - 1.0 wt.-%, of the total weight of the composition. Compositions containing the at least one reaction product **RP** in the above cited ranges have been found out to provide adequate bonding to lacquered metal surfaces, such as metal sheets that have been treated in a CDC process to improve the corrosion resistance.

Suitable polyisocyanates **PI** for use in the reaction with the silane **SI** include commercially available aliphatic, cycloaliphatic, or aromatic polyisocyanates, particularly diisocyanates.

Suitable diisocyanates by way of example are monomeric diisocyanates whose isocyanate groups are bonded in each case to one aliphatic, cycloaliphatic or arylaliphatic carbon atom, also called "aliphatic diisocyanates", such as 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine diisocyanate and lysine ester diisocyanate, cyclohexane 1,3-diisocyanate, cyclohexane 1,4-diisocyanate, 1-isocyanato-3,3,5-trimethyl-5-isocyanatomethylcyclohexane (= isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene.

Further suitable diisocyanates are monomeric diisocyanates having isocyanate groups bonded in each case to one aromatic carbon atom, also called "aromatic diisocyanates", such as 2,4- and 2,6-tolylene diisocyanate (TDI), 4,4'-, 2,4'-, and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI).

Further suitable compounds polyisocyanates **PI** include oligomers, polymers, and derivatives of monomeric aliphatic and aromatic diisocyanates containing isocyanurate, iminooxadiazindione, biuret, allophanate, carbodiimide, uretonimine or oxadiazine-trione groups. The term "oligomer" refers a compound built up through the linkage of a few monomers, for example dimers, trimers, tetramers, and other polymeric materials.

According to one or more embodiments, the polyisocyanate **PI** is selected from the group consisting of 4,4'-, 2,4'- and 2,2'-diphenylmethane diisocyanate (MDI), 2,4- and 2,6-toluylene diisocyanate (TDI), 1,6-hexamethylene diisocyanate (HDI), 1-isocyanato-3,3,5-trimethyl-5-isocyanatomethyl-cyclohexane (= isophorone diisocyanate or IPDI), an isocyanurate selected from the group consisting of MDI-, TDI-, HDI- and IPDI- isocyanurates, and a biuret selected from the group consisting of MDI-, TDI-, HDI- and IPDI-biurets.

The silane **SI** having only one isocyanate-reactive group is preferably a compound of formula (I) 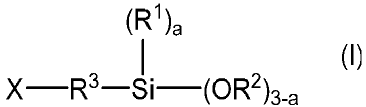 wherein
R¹ is a linear or branched alkyl-group having 1 to 8 carbon atoms,
R² is a linear or branched alkyl group having 1 to 5 carbon atoms or an acyl group,
R³ is a linear, branched, or cyclical alkyl group or an arylalkyl group having 1 to 20 carbon atoms and optionally containing one or more heteroatoms, and a is 0 or 1 or 2, and
X is an isocyanate reactive group selected from the group consisting of -OH,-SH, -NH₂, and -NHR⁴,
wherein
   R⁴ is a linear or branched alkyl group having 1 to 12 carbon atoms or a cycloalkyl or arylalkyl group having 6 to 12 carbon atoms or a substituent of formula (II)

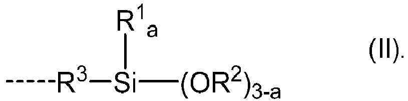

Preferably, the at least one reaction product **RP** does not include any isocyanate groups. It may furthermore be preferred that the reaction between the polyisocyanate **PI** and the silane **SI** is conducted at a molar ratio of the isocyanate groups to the isocyanate reactive groups of 1:1 or with a slight excess of isocyanate reactive groups. The reaction can be carried out via known methods, with exclusion of moisture at a temperature of 20 - 160 °C, preferably 40 - 140 °C, more preferably 50 - 120 °C, optionally in the presence of suitable catalysts, with metered addition of the polyisocyanate.

According to one or more embodiments, the silane **SI** is a mercaptosilane, preferably selected from the group consisting of 3-mercapto propyltrimethoxysilane, 3-mercapto propyltriethoxysilane, and 3-mercapto propyldimethoxymethylsilane.

According to one or more preferred embodiments, the at least one reaction product **RP** is a reaction product of 4,4'-, 2,4'- or 2,2'-diphenyl-methane diisocyanate (MDI) with a 3-mercapto propyltrimethoxysilane, 3-mercapto propyltriethoxysilane, or 3-mercapto propyldimethoxymethylsilane.

According to one or more embodiments, the composition further comprises
d) An aqueous dispersion of at least one epoxy resin **EP**.

According to one or more embodiments, the at least one epoxy resin **EP** comprises 0.1 - 20 wt.-%, preferably 0.5 - 15 wt.-%, more preferably 1 - 10 wt.-%, of the total weight of the composition.

The at least one epoxy resin **EP** is preferably a solid resin. The term "solid epoxy resin" designates epoxy resins having a glass transition temperature above the normal room temperature.

Preferred solid epoxy resins include those of formula (III): 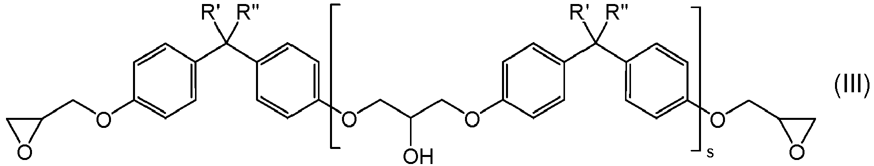 wherein the substituents R' and R" represent independently from one another either a hydrogen atom or a methyl group and the index s has a value of ≥ 1, preferably of ≥ 1.5, more preferably of 2 to 12, even more preferably of 4 to 14. Compounds of the formula (III) having an index s in the range from greater than 1 to 1.5 are known to a person skilled in the art as semisolid epoxy resins. For the purposes of the present disclosure, these are likewise considered to be solid epoxy resins.

Suitable solid epoxy resins are commercially available, for example, from Dow Chemical Company, from Huntsman International LLC, from Hexion Specialty Chemicals Inc., and from Olin Corporation.

Further suitable solid epoxy resins are so-called epoxy novolac resins. Preferred epoxy novolac resins include those of formula (IV) 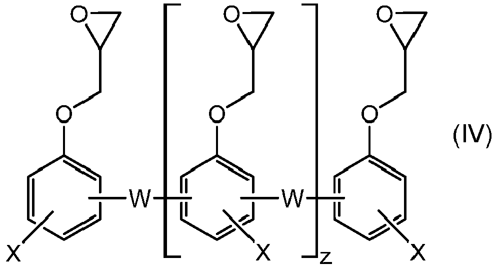 wherein the moiety X represents a hydrogen atom or a methyl group. The moiety W represents -CH₂- or a moiety of the formula (V).

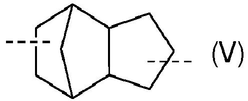

Preferably, the index z has a value of 0 to 7, especially a value of ≥ 3. Particularly, these are phenol or cresol novolacs (W represents -CH₂-).

Such epoxy novolac resins are commercially available, for example, under the trade names of EPN^{®}, ECN^{®}, and Tactix^{®} 556 (from Huntsman International LLC) and under the trade name of D.E.N^{®} (from Dow Chemical Company).

According to one or more embodiments, the at least one epoxy resin **EP** comprises at least one solid epoxy resin **EP1** of formula (III) and/or at least one solid epoxy resin **EP2** of formula (IV). According to one or more preferred embodiments, the at least one epoxy resin **EP** is a solid epoxy resin of formula (III).

According to one or more embodiments, the aqueous dispersion of at least one epoxy resin **EP** has median particle size dso in the range of 0.1 - 2.5 µm, preferably 0.15 - 2 µm, more preferably 0.2 - 1.5 µm and/or particle size d₉₀ of not more than 5 µm, preferably not more than 2.5 µm, more preferably not more than 1.5 µm. The term "particle size d₉₀" refers to a particle size below which 90 % of all particles by volume are smaller than the d₉₀ value.

The composition may further comprise at least one pigment. Preferred pigments are titanium dioxide, iron oxides and carbon black. The pigment defines the color of the protective coating, helps to develop strength and can improve durability, particularly UV-stability.

Besides the ingredients already mentioned, the composition can comprise further constituents, for example,
- plasticizers such as esters of organic carboxylic acids or their anhydrides, such as phthalates, for example dioctyl phthalate, diisononyl phthalate or diisodecyl phthalate, or hydrogenated phthalates, for example Hexamoll DINCH, adipates, for example dioctyl adipate, sulfonates, for example Mesamoll (Lanxess), azelates and sebacates, polyols, for example polyoxyalkylene polyols or polyester polyols, organic phosphoric and sulfonic esters, or polybutenes;
- fibers, for example of polyethylene or polypropylene fibers;
- dyes;
- rheological modifiers such as thickeners or thixotropic agents, examples being urea compounds of the kind described as thixotropic agents ("thixotropy endowning agent") in WO 02/48228 A2 on pages 9 to 11, and polyamide waxes;
- crosslinkers, examples being silane-functional oligomers and polymers;
- drying agents, for example tetraethoxysilane, vinyltriethoxysilane, α-functional silanes such as N-(silylmethyl)-O-methylcarbamates, more particularly N-(methyldiethoxysilylmethyl)-O-methylcarbamate, (methacryloyloxymethyl)silanes, ethoxymethylsilanes, N-phenyl-, N-cyclohexyl-, and N-alkylsilanes, orthoamic esters, calcium oxide, or molecular sieves;
- stabilizers to counter heat, light, and UV radiation;
- flame retardants, such as aluminum hydroxides and hydrates;
- surface-active substances such as wetting agents, flow control agents, deaerating agents or defoamers;
- biocides such as algicides, fungicides or fungal growth inhibitor substances;
- other substances commonly used in moisture-curing compositions.

The composition of the present invention is preferably essentially free of volatile organic solvents. The term "volatile organic solvent" refers in the present document to organic substances that are liquid at a temperature of 25 °C, are able to at least partially dissolve another substance, and have a standard boiling point of not more than 250 °C, preferably not more than 200 °C. The term "standard boiling point" refers in the present disclosure to boiling point measured at a pressure of 1 bar. The standard boiling point of a substance or composition can be determined, for example, by using an ebulliometer.

The expression "essentially free of volatile organic solvents" is understood to mean that the amount of such solvents is negligible, such as less than 1.5 wt.-%, preferably less than 1.0 wt.-%, more preferably less than 0.5 wt.-%, even more preferably less than 0.1 wt.-%, still more preferably less than 0.01 wt.-%, based on the total weight of the composition.

Another subject of the present invention is a method for producing a composition of the present invention comprising steps of providing in a mixer the constituents of the composition and mixing these under exclusion of moisture until a homogeneous paste is obtained.

Any conventional mixing technique may be used. The composition may be stored in a suitable moisture-tight container, particularly a bucket, a drum, a hobbock, a bag, a sausage, a cartridge, a can or a bottle.

Another subject of the present invention is a method for protecting a substrate against stone-chipping and/or corrosion, the method comprising steps of:
I) applying a composition of the present invention to at least part of a surface of the substrate to form a wet film of the composition thereon,
II) allowing the water contained in the wet film to evaporate until the applied composition has dried to form a protective coating on the surface of the substrate.

The water contained in the wet film of the composition can be allowed to evaporate by subjecting the wet film to air-drying at a low temperature, such as ambient temperature, or at an elevated temperature.

The composition may be applied to substrates using conventional methods known to those skilled in the art, such as by brushing, spraying, spin coating, roll coating, curtain coating, dipping, and/or gravure coating. It may be desirable to clean the substrate to remove grease, dirt, and other contaminants before the application of the composition. Pre-existing coatings may or may not be removed as well, depending upon the application context. After the pretreatment, the composition is applied to at least portion of a surface of the substrate and allowed to dry to form a protective coating on the surface of the substrate. One or more additional layers of coating can be applied if necessary, to obtain a satisfactory protection. However, a single layer of coating can also be sufficient.

Suitable materials of the substrate can include metals, such as anodized aluminum and stainless steel, metal alloys, intermetallic compositions, metal-containing composites, concrete, glass, polymethyl methacrylate (PMMA), polycarbonate, PVC, ABS, wood, and combinations of these. The substrate may be bare or may be at least partially coated with another coating system, such as a primer composition.

The composition of the present invention is especially suitable for forming protective coatings on motor vehicles or parts of motor vehicles, particularly in the underbody protection area or in the wheel arches. The protective coating shows excellent adhesion to both primed and unprimed surfaces, particularly to lacquered metal surfaces.

According to one or more embodiments, the surface of the substrate is a lacquered metal surface, preferably an electrophoretically coated metal surface, preferably of a vehicle body structure, more preferably of a vehicle underbody structure.

The composition of the present invention can be applied to the surface of a substrate at a variety of coating thicknesses. Preferably, the thickness of the coating after evaporation of the water, i.e. thickness of the protective coating, is 0.1 - 5.0 mm, more preferably 0.25 - 3.5 mm, most preferably 0.5 - 2.5 mm.

Still another subject of the present invention is use of the composition of the present invention for protective coating of substrates against stone-chipping and/or corrosion.

### Examples

### Preparation of reaction product RP

MDI (Desmodur^{®} 44 MC from Covestro) was charged into a reactor under nitrogen and melted. Subsequently 3-mercaptopropyltrimethoxysilane (Silanil^{®} 442 from BRB International BV) was added in a ratio of 1.05 mol mercapto groups to 1 mol isocyanate groups under agitation and the thus obtained reaction mixture was stirred until no isocyanate groups could be detected. The reaction product was subsequently cooled to room temperature under nitrogen and was used like this as the reaction product **RP** for the preparation of the protective coating compositions shown in Table 1.

### Preparation of the protective coating compositions

For each protective coating composition, the constituents as shown in Table 1 were mixed in a sealed polypropylene beaker by means of a centrifugal mixer (SpeedMixer^{®} DAC 150, FlakTek Inc.) until a homogenous paste was obtained. The coating compositions were stored in tightly sealed, moisture proof cans, for 1-7 days before they were used for testing properties of the protective coatings.

The "standard acrylic coating" used in the example compositions contained:
30 - 40% by weight of a commercially available water-based styrene-acrylic acid ester copolymer dispersion,
5 - 15% by weight of a commercially available epoxy resin dispersion,
35 - 65% by weight of fillers, such as muscovite,
5 - 10% of additives such as plasticizers, pigments, anti-foaming agents, deflocculating agents, and water.

### Peel resistance

Test specimens were prepared by applying the protective coating composition to a surface of a metal sheet that had been treated in a cathodic dip coating process with a corrosion protection liquid (CathoGuard^{®} 800 from BASF). The tested composition was applied using a coating knife to form a wet film having a thickness of 1000 µm and a width of 60 mm. The thus obtained test specimens were stored at normal room temperature (23 °C, ca. 50 % relative humidity) for a specific period (24, 48, or 144 hours) before being used for testing of peel resistances.

After the respective storage period, rectangular sample strips defined by cuts through the protective coating and having a width of 25 mm were formed in the middle of each metal sheet. One end of each sample strip was carefully separated from the surface of the metal sheet to enable clamping the sample strip between the grips of a tensile testing apparatus in the peel resistance measurements.

Before the peel strength measurement, each sample strip was reinforced using a tape (Hostphan-Folie) that was adhered to top surface of the sample strip with a layer of SikaMelt^{®}-9209 HT pressure sensitive adhesive having a coating weight of ca. 50 g/m². The loosened part of the sample strip was reinforced on both sides using the same tape.

Each test specimen was positioned centrally under the clamping jaw of the tensile testing apparatus and clamped in such a way that the loosened part of the sample strip formed a 90° angle to the electrocoated metal sheet. The sample strip was tensioned up to a pre-force of 1 N and then pulled at a test speed of 10 mm/min from the surface of the metal sheet. The test length was 120 mm, whereby the first and last 10 mm were not used in determination of the average peel resistance, which was calculated as Newtons per 25 mm width of the sample strip.

### Stone-chip resistance

The stone-chip resistance of the protective coatings was determined by following the procedure as described in GMW 15487 standard.

For the measuring of the stone-chip resistances, metallic sheets having dimensions of 10 cm x 20 cm x 1 mm were coated with the tested compositions using a coating thickness of 500 - 1000 µm. The coated sheets were then dried for three days at a temperature of 50 °C and for 24 hours at normal room temperature (23 °C, ca. 50 % relative humidity).

In the stone chip resistance test, the metal sheets coated with the protective coatings were bombarded with square edged iron chips having a particle size of 4.00 - 5.00 mm (Hartguss GH Diamant, from Eisenwerk Würth) at normal room temperature (23 °C, ca. 50 % relative humidity). The iron chips were accelerated to a speed of approximately 10 m/s before being impacted to the surface of the metal plate.

The measurement was continued until a first hole penetrating through the full thickness of the coating was observed by visual means. The time from the beginning of the measurement until the end of bombarding was recorded as the stone-chip resistance time.

The values of stone-chip resistance times presented in Table 1 have been calculated as an average of two measurements conducted using the same coating composition.

**Table 1**

| **Composition [wt.-%]** | **Ref-1** | **Ex-1** | **Ex-2** |
|---|---|---|---|
| "Standard" acrylic coating | 100.00 | 99.50 | 99.00 |
| Reaction product **RP** | 0.00 | 0.50 | 1.00 |
| Total | 100.00 | 100.00 | 100.00 |

| *Peel resistance [N*/*25 mm]* | | | |
|---|---|---|---|
| After 24 hours | 13.3 | 12.9 | 13.7 |
| After 48 hours | 15.2 | 18.2 | 15.5 |
| After 144 hours | 6.1 | 9.7 | 10.4 |

| *Stone chip resistance* | | | |
|---|---|---|---|
| Coating thickness [µm] | 800 | 800 | 800 |
| Resistance [seconds] | 750 | 750 | 780 |

## Claims

1. A composition comprising:
a) an aqueous polymer dispersion of at least one polymer **P**,
b) at least one inorganic filler **F**, and
c) at least one reaction product **RP** of a polyisocyanate **PI** with a silane **SI** having only one isocyanate-reactive group, wherein the at least one reaction product **RP** has a weight average molecular weight M_{w} of not more than 1500 g/mol, preferably not more than 1000 g/mol.

2. The composition according to claim 1, wherein the at least one polymer **P** comprises 1 - 50 wt.-%, preferably 5 - 45wt.-%, more preferably 10 - 35wt.-%, even more preferably 10 - 30 wt.-%, of the total weight of the composition.

3. The composition according to claim 1 or 2 comprising 1 - 35 wt.-%, preferably 2.5 - 30 wt.-%, more preferably 5 - 30 wt.-%, even more preferably 7.5 - 25 wt.-%, based on the total weight of the composition, of water.

4. The composition according to any one of previous claims, wherein the at least one polymer **P** has a glass transition temperature (T_{g}) measured by dynamical mechanical analysis (DMA) as the peak of the measured loss modulus (G") curve using an applied frequency of 1 Hz and a strain level of 0.1 % of 5 - 100 °C, preferably 5 - 75 °C.

5. The composition according to any one of previous claims, wherein the at least one inorganic filler **F** comprises 5 - 65 wt.-%, preferably 10 - 60 wt.-%, more preferably 20 - 55 wt.-%, even more preferably 30 - 55 wt.-%, of the total weight of the composition.

6. The composition according to any one of previous claims, wherein the at least one reaction product **RP** comprises 0.1 - 1.5 wt.-%, preferably 0.15 - 1.25 wt.-%, of the total weight of the composition.

7. The composition according to any one of previous claims, wherein the polyisocyanate **PI** is selected from the group consisting of 4,4'-, 2,4'- and 2,2'-diphenylmethane diisocyanate (MDI), 2,4- and 2,6-toluylene diisocyanate (TDI), 1,6-hexamethylene diisocyanate (HDI), 1-isocyanato-3,3,5-trimethyl-5-isocyanatomethyl-cyclohexane (= isophorone diisocyanate or IPDI), an isocyanurate selected from the group consisting of MDI-, TDI-, HDI- and IPDI- isocyanurates, and a biuret selected from the group consisting of MDI-, TDI-, HDI- and IPDI-biurets.

8. The composition according to any one of previous claims, wherein the silane **SI** is a compound of formula (I) 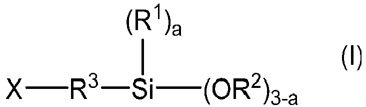 wherein
R¹ is a linear or branched alkyl-group having 1 to 8 carbon atoms,
R² is a linear or branched alkyl group having 1 to 5 carbon atoms or an acyl group,
R³ is a linear, branched, or cyclical alkyl group or an arylalkyl group having 1 to 20 carbon atoms and optionally containing one or more heteroatoms, and
a is 0 or 1 or 2, and
X is an isocyanate reactive group selected from the group consisting of -OH, -SH, -NH₂, and -NHR⁴,
wherein
R⁴ is a linear or branched alkyl group having 1 to 12 carbon atoms or a cycloalkyl or arylalkyl group having 6 to 12 carbon atoms or a substituent of formula (II)

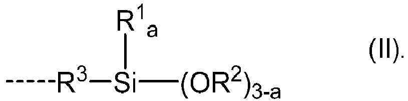

9. The composition according to any one of previous claims, wherein the at least one reaction product **RP** does not include any isocyanate groups.

10. The composition according to any one of previous claims, wherein the silane **SI** is selected from the group consisting of 3-mercapto propyltrimethoxysilane, 3-mercapto propyltriethoxysilane, and 3-mercapto propyldimethoxymethylsilane.

11. The composition according to any one of previous claims, wherein the at least one reaction product **RP** is a reaction product of 4,4'-, 2,4'- or 2,2'-diphenyl-methane diisocyanate (MDI) with a 3-mercapto propyltrimethoxysilane, 3-mercapto propyltriethoxysilane, or 3-mercapto propyldimethoxymethylsilane.

12. The composition according to any one of previous claims further comprising:
d) An aqueous dispersion of at least one epoxy resin **EP**.

13. The composition according to claim 12, wherein the at least one epoxy resin **EP** comprises 0.1 - 20 wt.-%, preferably 0.5 - 15 wt.-%, more preferably 1 - 10 wt.-%, of the total weight of the composition.

14. A method for protecting a substrate against stone-chipping and/or corrosion, the method comprising steps of:
I) applying a composition according to any one of claims 1-13 to at least part of a surface of the substrate to form a wet film of the composition thereon,
II) allowing the water contained in the wet film to evaporate until the applied composition has dried to form a protective coating on the surface of the substrate.

15. The method according to claim 14, wherein the thickness of the protective coating is 0.1 - 5.0 mm, preferably 0.25 - 3.5 mm, most preferably 0.5 - 2.5 mm.

16. Use of the composition according to any one of claims 1-13 for protective coating of substrates against stone-chipping and/or corrosion.
